# EUROPEAN PATENT SPECIFICATION

(11) **EP 1 863 609 B1**
(45) Date of publication and mention of the grant of the patent: **16.05.2018**
(21) Application number: 06705183.9
(22) Date of filing: 17.02.2006
(51) Int. Cl.: B23B 31/103, B25B 23/00, B25B 23/12

(54) **SCREWDRIVER BIT LOCKING MECHANISM**
SCHRAUBENDREHER-BIT-ARRETIERUNGSMECHANISMUS
MECANISME DE VERROUILLAGE D'ENBOUT DE TOURNEVIS

(30) Priority: 18.02.2005 CA 2497716
(43) Date of publication of application: 12.12.2007
(73) Proprietor: Frühm, Hermann, Coquitlam, BC V3J 5E5 (CA)
(72) Inventor: Frühm, Hermann, Coquitlam, BC V3J 5E5 (CA)
(74) Representative: Eisenführ Speiser
(86) International application number: PCT/CA2006/000228
(87) International publication number: WO 2006/086881

(56) References cited:
- WO-A-00/66329
- CH-A- 86 413
- DE-U1- 9 403 686
- US-A- 3 138 044
- US-A- 3 177 910
- US-A- 3 656 523
- US-A- 4 235 269
- US-A1- 2004 255 732
- US-B1- 6 453 564
- US-B1- 6 675 420

## Description

### Technical Field

This invention pertains to releasable locking of a screwdriver bit into a chuck without significantly impeding insertion of the screwdriver's shaft into a narrow aperture.

### Background

Multiple-bit screwdrivers can be used with any one of a plurality of interchangeable bits. The bit selected for use is inserted into a chuck machined in the end of the screwdriver's shaft. A magnet is often embedded in the chuck to magnetically retain the bit until it is manually withdrawn from the chuck and replaced with a different bit. The magnet is usually unable to retain a bit which becomes jammed within a screw head. Consequently, a jammed bit may be pulled out of the chuck as the screwdriver is drawn away from the screw. This is particularly problematic if the screw is recessed within an aperture-if the bit does not protrude from the aperture it can be difficult to retrieve the bit.

Screwdriver bit locking mechanisms address the foregoing problem. One common bit locking mechanism incorporates a springloaded ball. When the bit is inserted into the chuck, the spring forces the ball into a circumferential notch formed around the bit's shank. A circumferential latch mechanism prevents dislodgement of the ball from the notch. The bit is thus retained within the chuck and cannot be pulled free if it becomes jammed in a screw head. To remove the bit from the chuck, one must disengage the latch, then pull the bit out of the chuck.

A conventional bit locking mechanism surrounds the chuck. The locking mechanism's bulk prevents insertion of the screwdriver's shaft, beyond the locking mechanism, into an aperture narrower than the locking mechanism's largest external cross-sectional dimension. This is especially problematic if the increasingly popular single-ended ¼ inch hexagonal bits (so-called "insert bits" or "power bits") complying with American National Standards Institute (ANSI) specification B 104.4-1982 are used, since the bit locking mechanism must be mounted close to the end of the screwdriver's shaft in order to engage the bit. Preferably, the screwdriver should have a relatively long shaft capable of being fully inserted into an aperture which is only slightly larger than the shaft's largest external cross-sectional dimension.
The document WO 00/66329 discloses a screwdriver with a holder having a quick-contact mechanism activated by inserting a single- or double-ended tool bit, the tool bit engaging means to force deflection of retaining means, where the retaining means actuate means for engaging the tool and release by manual operation of the retaining means, whereby the tool bit is pushed out from the holder so that the user can operate the tool bit holder using one hand only.

### Brief Description of Drawings

Figure 1A is a partially sectioned side elevation view of a screwdriver shaft having a bit locking mechanism, showing the locking mechanism in the insert/release position relative to a bit.
Figure 1B shows the Figure 1A locking mechanism in the closed position.
Figure 2 is a partially sectioned side elevation view of a screwdriver shaft having a bit locking mechanism, adapted for use with the bit shown in Figures 1A and 1B or with the ball-retainable bit shown in Figure 2.
Figure 3 is a partially sectioned side elevation view of a screwdriver shaft having an alternative bit locking mechanism, and showing a bit adapted for use with the Figure 2 or Figure 3 locking mechanisms.
Figure 4 is an end elevation sectional view, on an enlarged scale, taken with respect to line 4-4 shown in each of Figures 1A, 1B, 2 and 3, showing the bit locking mechanism's insert/release position in solid outline and showing the bit locking mechanism's closed position in dashed outline.
Figure 5 is a side elevation sectional view, on an enlarged scale, of the screwdriver shaft portion of the apparatus depicted in Figures 1A and 1B.
Figure 6A is a side elevation view, on an enlarged scale, of the pivot lever portion of the apparatus depicted in Figures 1A and 1B. Figure 6B is a side elevation view, on an enlarged scale, of the pivot lever portion of the apparatus depicted in Figure 16 in accordance with the invention
Figure 7 is a partially sectioned side elevation view of a screwdriver shaft having another alternative bit locking mechanism, shown in the closed position relative to a bit adapted for use with the Figure 7 locking mechanism or with a ball type bit locking mechanism.
Figure 8 is a partially sectioned side elevation view of a screwdriver shaft having a further alternative bit locking mechanism, shown retaining a conventional ball- retainable bit.
Figure 9A is a side elevation view, on an enlarged scale, of the pivot lever portion of the apparatus depicted in Figure 8. Figure 9B is a side elevation view, on an enlarged scale, of an alternative pivot lever for the apparatus depicted in Figure 8.
Figure 10 is a partially sectioned top plan view of the apparatus depicted in Figures 8 and 9A.
Figure 11 is a partially sectioned side elevation view of a screwdriver shaft having an alternative form of the Figure 8 and 10 locking mechanism, shown retaining a conventional ball-retainable bit.
Figure 12 is an end elevation sectional view, on an enlarged scale, taken with respect to line 12-12 shown in Figure 8, showing the bit locking mechanism's bit-engaging portion in dashed outline.
Figure 13 is an end elevation sectional view, on an enlarged scale, taken with respect to line 13-13 shown in Figure 11, showing the bit locking mechanism's bit-engaging portion in dashed outline.
Figure 14 is an end elevation view, on an enlarged scale, of the screwdriver shaft portion of the apparatus depicted in Figures 11 and 13.
Figure 15 is a partially sectioned top plan view of the apparatus depicted in Figures 11 and 13.
Figure 16 is a partially sectioned side elevation view of a screwdriver shaft having a first springless bit locking mechanism in accordance with the invention, and showing a bit adapted for use with the Figure 16 locking mechanism.

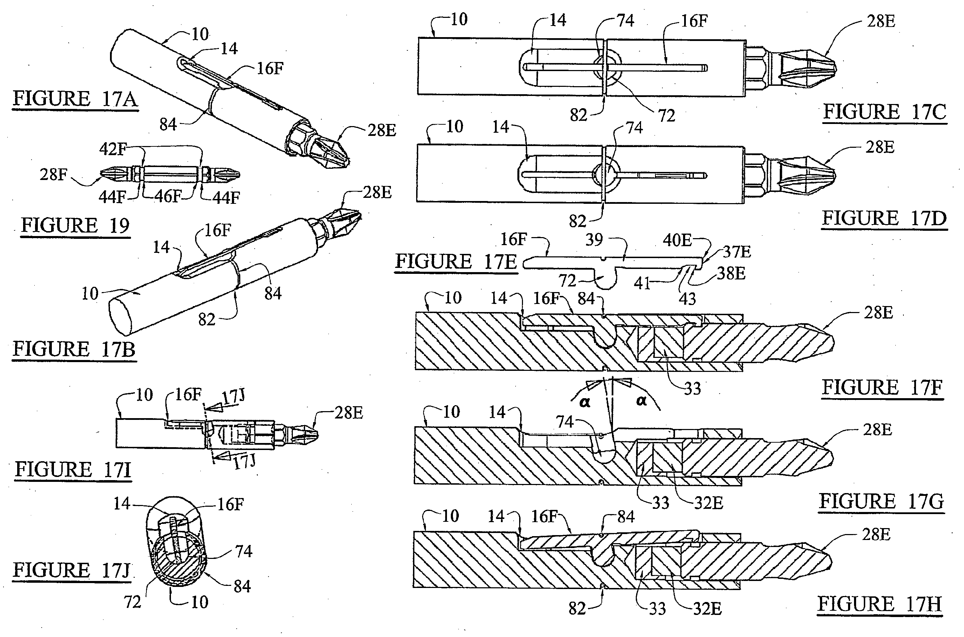

Figures 17A and 17B are oblique isometric views of a screwdriver shaft having a second springless bit locking mechanism in accordance with the invention. Figure 17C is a top plan view of the apparatus depicted in Figures 17A and 17B. Figure 17D is similar to Figure 17C, but omits the pivot lever portion of the apparatus. Figure 17E depicts the pivot lever portion of the apparatus shown in Figures 17A and 17B. Figure 17F is a sectional side elevation view of the apparatus depicted in Figures 17A and 17B, showing the locking mechanism in the closed position. Figure 17G is similar to Figure 17F, but omits the pivot lever portion of the apparatus. Figure 17H is similar to Figure 17F, but shows the locking mechanism in the bit insert/release position. Figure 17I is a partially sectioned side elevation view of the apparatus depicted in Figure 17D. Figure 17J is a cross-sectional view taken with respect to line 17 J- 17J shown in Figure 17I.

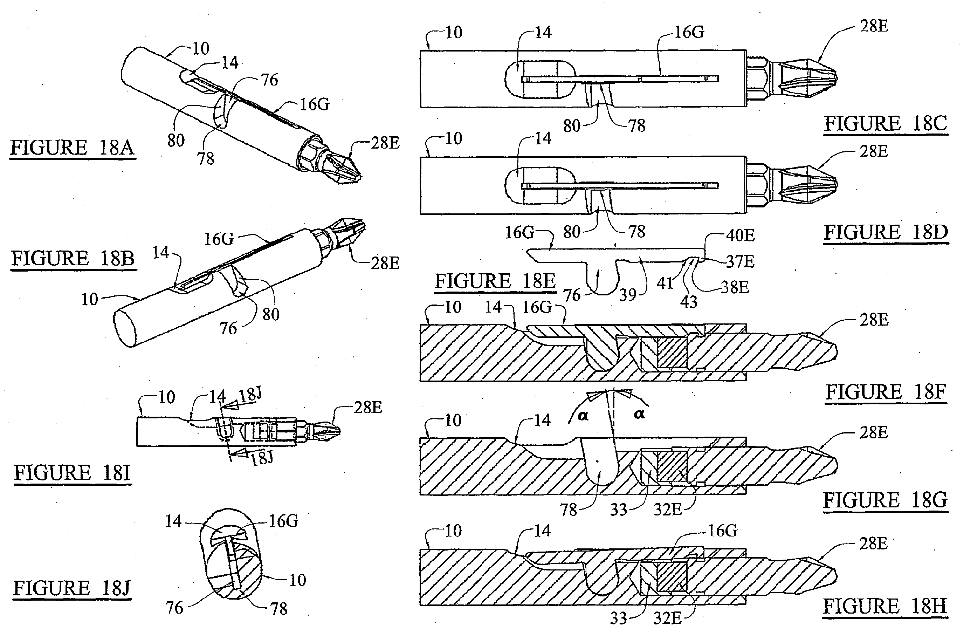

Figures 18A and 18B are oblique isometric views of a screwdriver shaft having a third springless bit locking mechanism in accordance with the invention. Figure 18C is a top plan view of the apparatus depicted in Figures 18A and 18B. Figure 18D is similar to Figure 18C, but omits the pivot lever portion of the apparatus. Figure 18E depicts the pivot lever portion of the apparatus shown in Figures 18A and 18B. Figure 18F is a sectional side elevation view of the apparatus depicted in Figures 18A and 18B, showing the locking mechanism in the closed position. Figure 18G is similar to Figure 18F, but omits the pivot lever portion of the apparatus. Figure 18H is similar to Figure 18F, but shows the locking mechanism in the bit insert/release position. Figure 18I is a partially sectioned side elevation view of the apparatus depicted in Figure 18D. Figure 18J is a cross-sectional view taken with respect to line 18J-18J shown in Figure 18I.
Figure 19 is a side elevation view of a double-ended screwdriver bit for use with the invention.

### Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

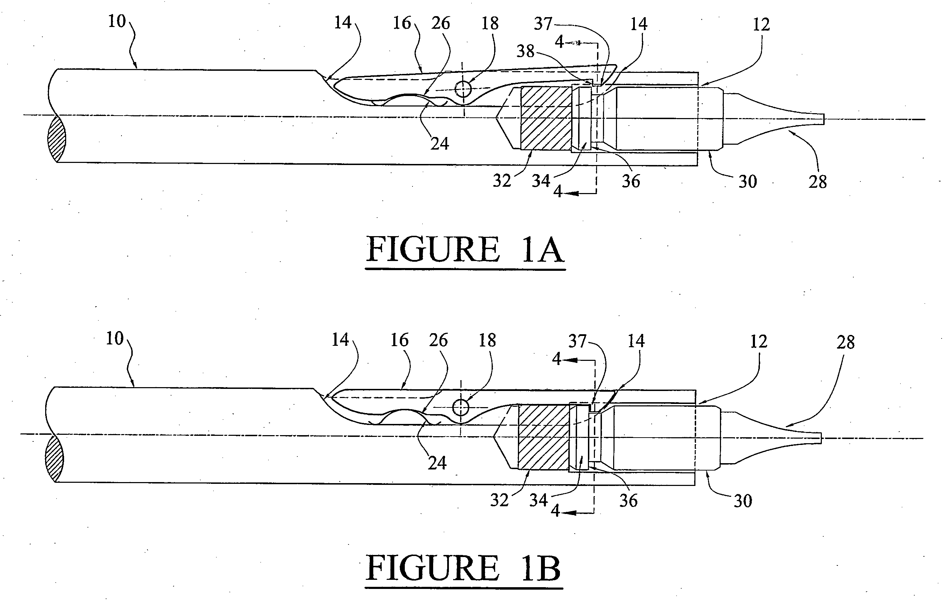

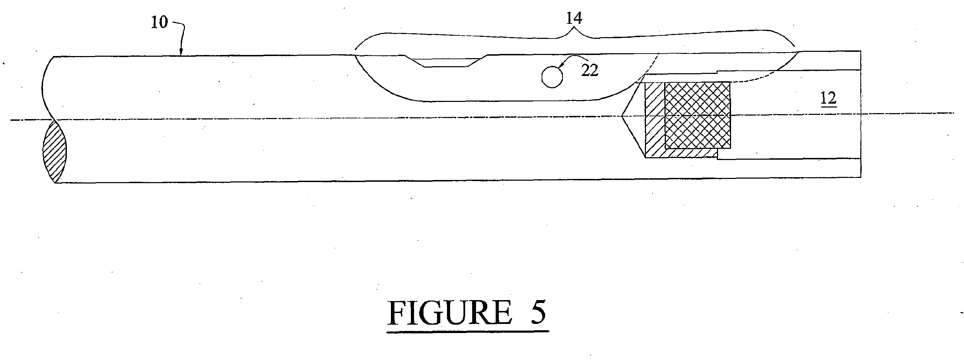

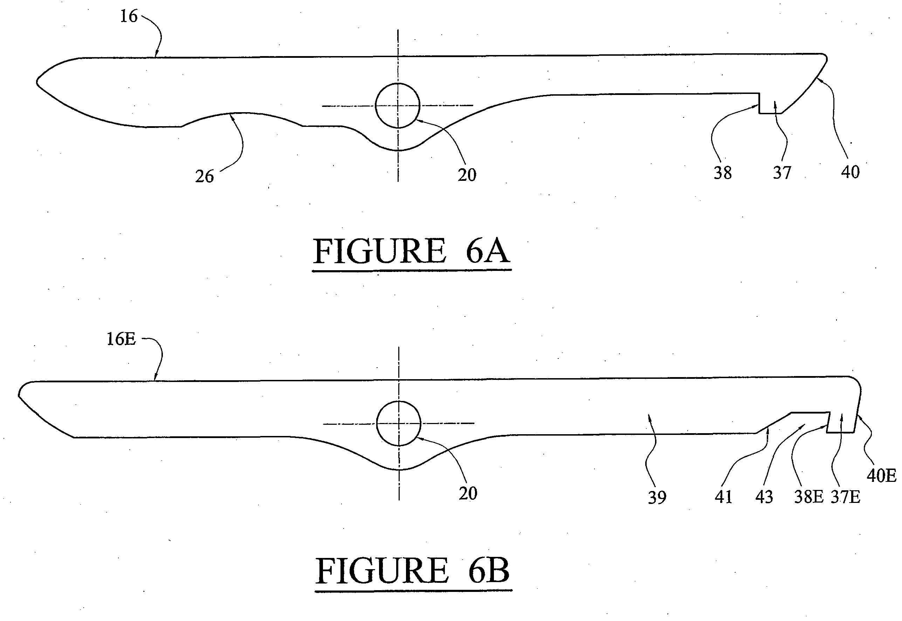

Figures 1A and 1B depict a screwdriver shaft 10 having an internally hexagonally cross-sectioned chuck 12 formed (e.g. via a broach cutting operation) in the end of shaft 10. A longitudinally extending slot 14 is formed (e.g. via a Woodruff cutter) in the side of shaft 10. As best seen in Figure 5, slot 14 intersects a rearward portion of the broached aperture forming chuck 12, although such intersection is preferably minimized or eliminated as explained below. (As used herein, "forward" means the direction toward the open, bit-receiving end of chuck 12 and "rearward" means the opposite direction.) A lever 16 which extends substantially parallel to shaft 10, is pivotally mounted in slot 14 on pivot pin 18, which extends transversely through aperture 20 (Figure 6A) in lever 16 into apertures machined in shaft 10 on opposed sides of slot 14 (only one such aperture 22 is shown in Figure 5). A leaf spring 24 is provided between slot 14's rearward end and notch 26 formed in the underside of lever 16's rearward end. Spring 24 exerts an upward force against lever 16, biasing lever 16 in the clockwise direction about pivot pin 18, as viewed in Figures 1A and 1B.

Screwdriver bit 28 has a hexagonally cross-sectioned shank 30 sized and shaped for slidable, close-fit insertion in chuck 12. A magnet 32 may optionally be provided in chuck 12's base to magnetically retain bit 28 within chuck 12. Bit 28 is specially adapted for use with lever 16 by forming collar 34 around bit 28's rearward end with a forward face 36 substantially perpendicular to the longitudinal axis of bit 28. As best seen in Figure 6A, lever 16's forward end is formed with a tab 37 having a rearward face 38 substantially perpendicular to the longitudinal axis of lever 16. Lever 16's forward end 40 is rounded. The length of collar 34 is substantially equal to the difference between (i) the distance from pivot pin 18 to tab 37's rearward face 38, and (ii) the distance from pivot pin 18 to the rearward end of chuck 12. As bit 28 is inserted through chuck 12, the bit's rearward end slides under and along lever 16's forward end 40, overcoming the biasing force exerted by spring 24 and pivoting lever 16 counter-clockwise (as viewed in Figures 1A and 1B) about pivot pin 18 until lever 16 is in the bit insert/release position shown in Figure 1A. As soon as collar 34's forward face 36 moves sufficiently rearwardly to clear tab 37's rearward face 38, spring 24 pivots lever 16 clockwise about pin 18 into the closed position shown in Figure 1B, such that tab 37 protrudes into the rearward end of chuck 12 with tab 37's rearward face 38 latched against bit 28's forward face 36 to prevent unintended withdrawal of bit 28 from chuck 12. Bit 28 can be removed from chuck 12 by depressing the rearward end of lever 16 to overcome spring 24's biasing force and pivot lever 16 counter-clockwise about pivot pin 18 into the Figure 1A bit insert/release position. Bit 28 can then be withdrawn from chuck 12 while lever 16 is held in the bit insert/release position.

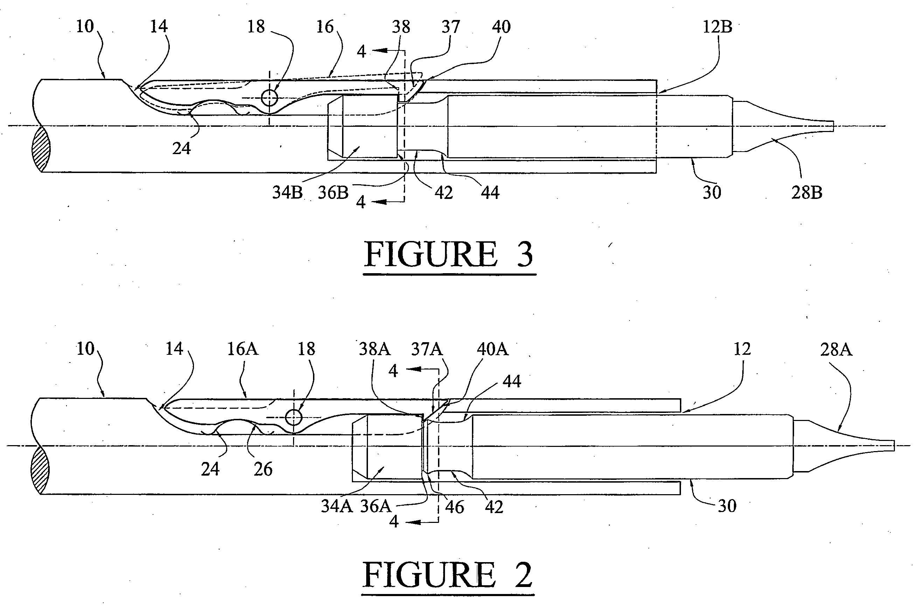

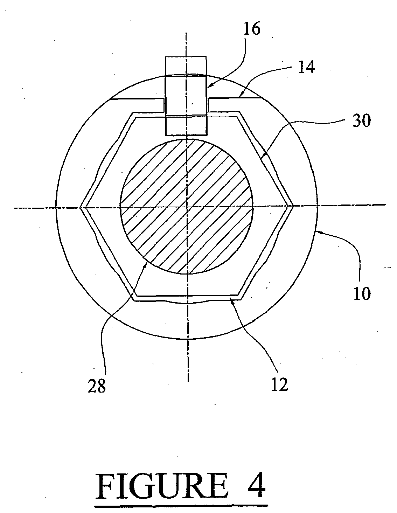

Figure 2 depicts an alternative locking mechanism adapted for use with an alternative, ball-retainable bit 28A. Components which are similar in the embodiments depicted in Figures 1A, 1B, 2, 4, 5 and 6 bear the same reference numerals in those Figures and need not be described further. Lever 16A depicted in Figure 2 is similar to lever 16, except lever 16A has a tapered forward end 40A, giving tab 37A a triangular shape having a rearward face 38A substantially perpendicular to the longitudinal axis of lever 16A. This allows bit 28A to be formed with a circumferential recess 42 having circumferentially rounded forward and rearward ends 44, 46. Rearward end 46 is circumferentially notched between collar 34A's forward face 36A and recess 42. Forward face 36A is substantially perpendicular to the longitudinal axis of bit 28A. Besides permitting latching engagement of lever 16A's rearward face 38A with bit 28A's forward face 36A, this permits use of bit 28A in screwdrivers having conventional ball type locking mechanisms. Specifically, recess 42's rounded ends 44, 46 are capable of latchingly engaging a conventional bit locking mechanism's springloaded ball in the same manner as a conventional bit complying with the aforementioned ANSI specification. Conversely, bits designed only for use with ball type locking mechanisms may be imperfectly retained by lever 16A, due to the absence on such bits of a forward face substantially perpendicular to the bit's longitudinal axis. Operation of the Figure 2 embodiment is otherwise similar to that of the embodiment of Figures 1A and 1B.

Figure 3 depicts a locking mechanism which is similar to the locking mechanism depicted in Figures 1A and 1B, except that the Figure 3 chuck 12B is formed to receive alternative bit 28B which can be used either with the Figure 3 locking mechanism or with the Figure 2 locking mechanism. Components which are similar in the embodiments of Figures 1A, 1B, 2, 3, 4, 5 and 6 bear the same reference numerals in those Figures and need not be described further. Bit 28B's rearward collar 34B is formed with a forward face 36B substantially perpendicular to the bit's longitudinal axis, capable of latchingly engaging tab 37's rearward face 38 as previously described in relation to Figures 1A, 1B; and also capable of latchingly engaging tab 37A's rearward face 38A as previously described in relation to Figure 2. Operation of the Figure 3 embodiment is otherwise similar to that of the embodiment of Figures 1A and 1B.

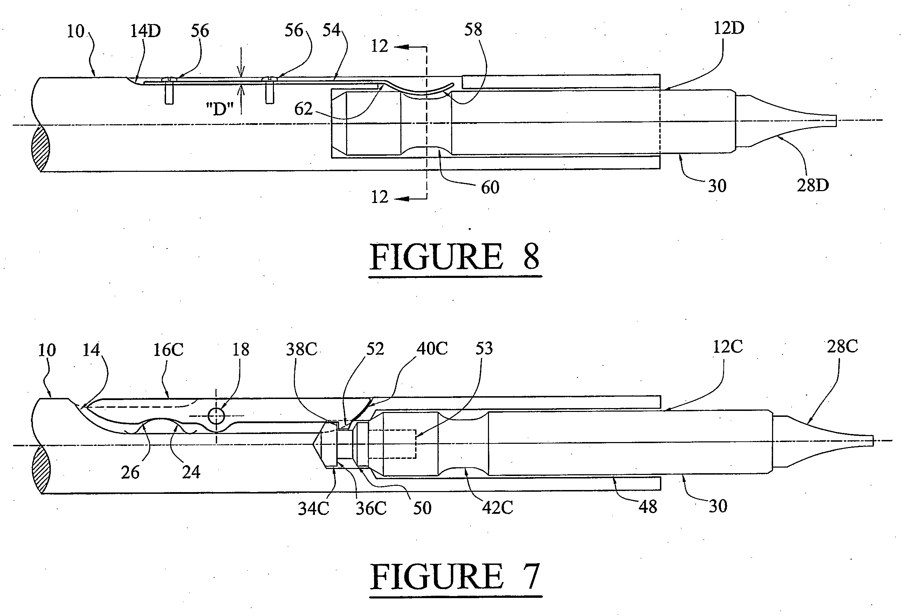

Figure 7 depicts another alternative locking mechanism. Components which are similar in the embodiments of Figures 1A, 1B, 2, 3, 4, 5, 6 and 7 bear the same reference numerals in those Figures and need not be described further. The Figure 7 locking mechanism reduces intersection of slot 14 with chuck 12C, reducing potential weakening of shaft 10 which may be important if shaft 10 is power-driven. Chuck 12C is formed by broach-cutting a primary longitudinal aperture 48 in shaft 10's forward end, then broach-cutting a secondary aperture 50 which has a smaller diameter than and extends longitudinally rearwardly from the rearward end of primary aperture 48. Alternative bit 28C is formed in compliance with ANSI specification B 107.4-1982, for example by providing recess 42C having rounded forward and rearward ends. Bit 28C is additionally provided with a reduced diameter rearward extension including collar 34C having a forward face 36C substantially perpendicular to the longitudinal axis of bit 28C. The rearward extension portion of bit 28C extends within secondary aperture 50 when bit 28C is fully inserted into chuck 12C. A downwardly extending tab 52 having a rearward face 38C substantially perpendicular to the longitudinal axis of lever 16C is formed just rearwardly of lever 16C's rounded forward end 40C. As bit 28C is inserted through chuck 12C, collar 34C slides under and along lever 16C's forward end 40C, overcoming the biasing force exerted by spring 24 and pivoting lever 16C counter-clockwise (as viewed in Figure 7) about pivot pin 18. As soon as forward face 36C moves sufficiently rearwardly to clear lever 16C's rearward face 38C, spring 24 pivots lever 16 clockwise about pin 18 into the closed position shown in Figure 7, latching rearward face 38C against forward face 36C to prevent unintended withdrawal of bit 28C from chuck 12C. The rearward extension portion of bit 28C allows slot 14 to be located sufficiently rearwardly on shaft 10 that slot 14 does not intersect chuck 12C's primary aperture 48. The rearward extension portion of bit 28C may optionally be fabricated as a separate piece having a forward projecting stud 53 which can be press-fitted into the rearward end of the forward portion of bit 28C.

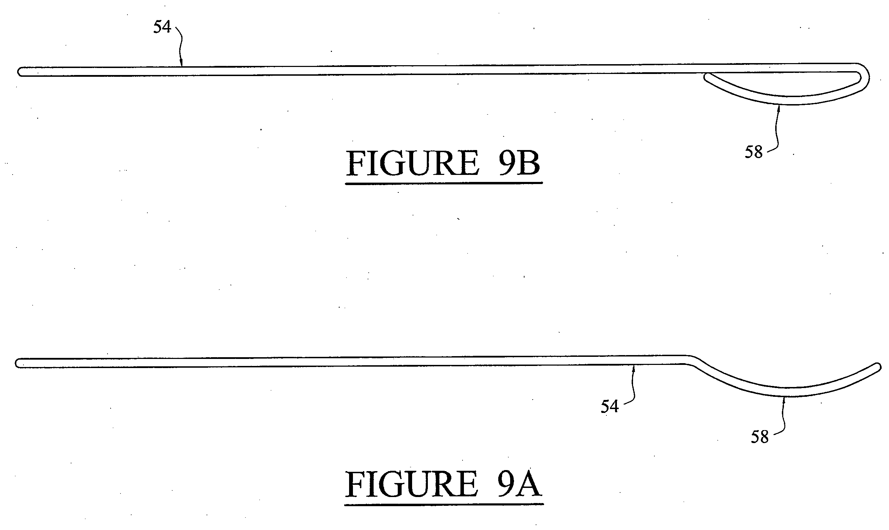

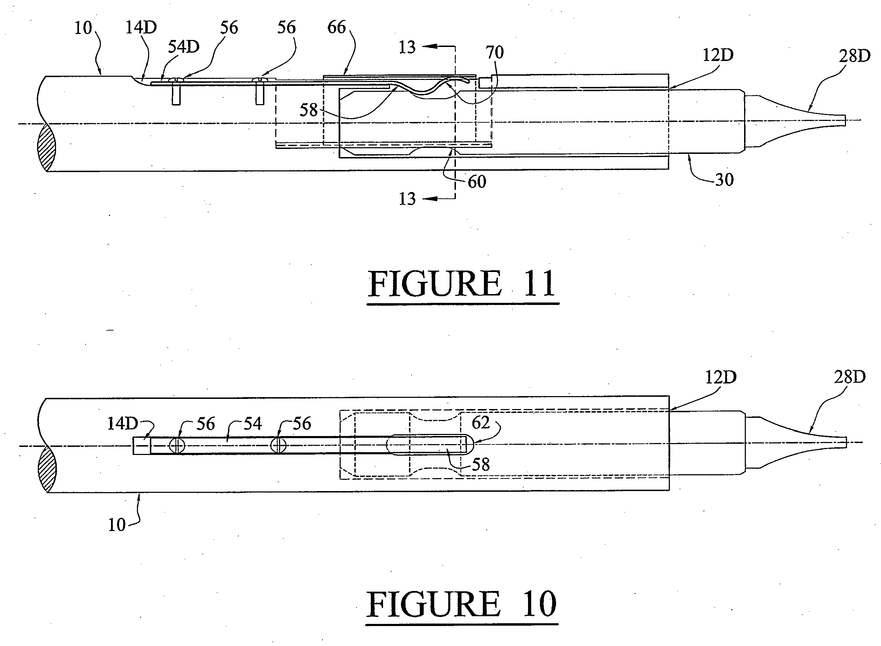

Figures 8, 10 and 12 depict a simple, inexpensive locking mechanism which can be used with a conventional ball-retainable bit 28D. Components which are similar in the embodiments of Figures 1A, 1B, 8, 10 and 12 bear the same reference numerals in those Figures and need not be described further. A spring steel lever 54 is fastened to shaft 10, within slot 14D, by screws 56. A downwardly rounded protrusion 58 is formed on lever 54's forward end. As bit 28D is inserted into chuck 12D, the bit's rearward end slides under protrusion 58. Lever 54's spring steel construction allows protrusion 58 to deflect upwardly as bit 28D slides under and rearwardly of protrusion 58. When bit 28D's circumferential recess 60 reaches a position adjacent protrusion 58, the spring steel construction of lever 54 biases protrusion 58 into recess 60. Although lever 54 does not latchingly engage bit 28D, the bit is retained sufficiently to resist some forces which could otherwise cause unwanted withdrawal of bit 28D from chuck 12D as shaft 10 is drawn away from a screw head while bit 28D is seated in the screw head. Slot 14D's depth "D" (Figure 8) can be relatively shallow compared to the depth of slot 14 depicted in Figures 1A, 1B. Moreover, slot 14D need only intersect chuck 12D over a small aperture portion 62 (best seen in Figure 10) sufficient to allow the aforementioned interaction of protrusion 58 and recess 60. As shown in Figures 9A and 9B, protrusion 58 can be formed in various ways, for example by bending lever 54's forward end over on itself as shown in Figure 9B.

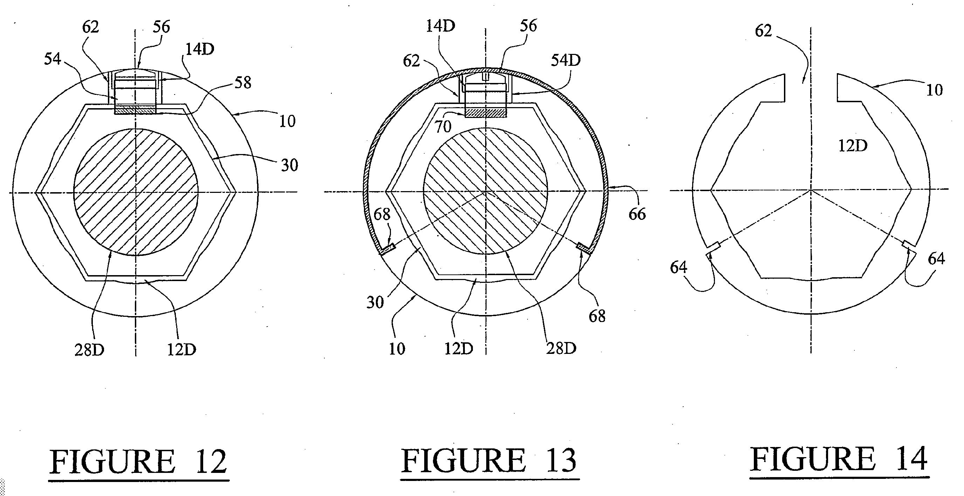

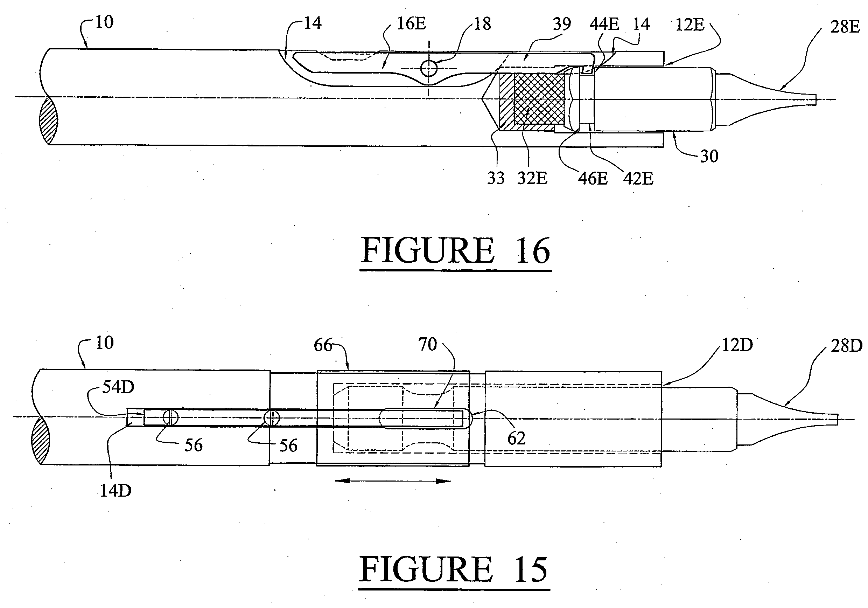

Figures 11 and 13-15 depict a modification for enhancing the bit retention capability of the Figure 8 & 10 embodiment. Components which are similar in the embodiments of Figures 8, 10, 11 and 13-15 bear the same reference numerals in those Figures and need not be described further. As best seen in Figure 14, an approximately 270° circumferential portion of shaft 10 is machined to reduce the shaft's diameter on both sides of aperture 62 along a region which extends longitudinally from the forward end of aperture 62 over a longitudinal distance at least double the length of aperture 62. Longitudinally extending notches 64 are machined radially in shaft 10 along the opposed ends of shaft 10's reduced diameter portion. Semi-cylindrical sleeve 66 is formed with radially inwardly extending tabs 68 which are slidably extended within notches 64. Sleeve 66 is sized and shaped to closely match the size and shape of shaft 10's reduced diameter portion, allowing sleeve 66's outer circumference to smoothly merge with the outer circumference of the non-reduced diameter portion of shaft 10 when sleeve 66 is slidably mounted on shaft 10, as shown in Figures 13 and 15. Sleeve 66 can be slidably moved forwardly or rearwardly along shaft 10's reduced diameter portion, as indicated by the doubleheaded arrow in Figure 15.

Lever 54D's forward end is formed with an "S" shaped protrusion 70 best seen in Figure 11. The rearward, downwardly rounded portion of protrusion 70 is functionally equivalent to downwardly rounded protrusion 58 described above in relation to the embodiment of Figures 8 and 10. The forward, upwardly rounded portion of protrusion 70 bears against the underside of sleeve 66, when sleeve 66 is slidably moved into its forward, closed position shown in Figure 11. This assists in maintaining engagement of protrusion 70's downwardly rounded portion within bit 28D's recess 60, enhancing lever 54D's capability to prevent unwanted withdrawal of bit 28D from chuck 12D. Bit 28D can be withdrawn from chuck 12D by sliding sleeve 66 rearwardly to expose aperture 62, allowing protrusion 70 to deflect upwardly through aperture 62 as bit 28D is pulled forwardly to withdraw bit 28D from chuck 12D.

Figures 6B and 16 depict a first alternative bit locking mechanism which does not require a spring to bias the pivot lever into the closed position. Components which are similar in the embodiments of Figures 1A, 1B, 6B and 16 bear the same reference numerals in those Figures and need not be described further. Lever 16E depicted in Figures 6B and 16 is similar to lever 16 depicted in Figure 6A, except lever 16E's forward end 40E is less tapered, giving tab 37E a rectangular shape. Tab 37E's rearward face 38E has a steep downward and rearward taper. Lever 16E's forward portion 39 is wider than the corresponding portion of lever 16. The forward end of forward portion 39 has a shallow downwardly and rearwardly tapered face 41. A notch 43 is thus formed between faces 38E and 41.

Bit 28E is formed with a circumferential recess 42E having forward and rearward ends 44E, 46E which are both substantially perpendicular to the longitudinal axis of bit 28E to permit latching engagement of lever 16E's tab 37E within bit 28E's recess 42E.

Magnet 32E is provided in chuck 12E's base to magnetically retain bit 28E within chuck 12E. Magnet 32E also magnetically retains lever 16E in the closed position depicted in Figure 16, thus eliminating the need for a spring, as aforesaid. Magnet 32E can be optionally encased within a brass sleeve 33 to reduce dissipation of magnet forces exerted by magnet 32E, e.g. in comparison to the dissipation that would occur if magnet 32E were encased in steel. Operation of the Figure 16 embodiment is otherwise similar to that of the embodiment of Figures 1A and 1B.

Figures 17A-17J depict a second alternative bit locking mechanism which does not require a spring to bias the pivot lever into the closed position. Components which are similar in the embodiments of Figures 1A, 1B, 6B, 16 and 17A-17J bear the same reference numerals in those Figures and need not be described further. Lever 16F depicted in Figures 17A, 17C, 17E, 17F and 17H-17J is similar to lever 16E depicted in Figure 6B, except lever 16F has no pivot pin receiving aperture (cf. lever 16E's aperture 20) and does not require a pivot pin. Instead, a semi-spherical protrusion 72 is formed on the central underside of lever 16F. Protrusion 72 is canted downwardly and forwardly at a slight angle (about 10°) relative to lever 16F's transverse axis. A recess 74 sized and shaped to snugly but pivotably receive protrusion 72 is formed in shaft 10, below the central portion of slot 14. Recess 74 is canted downwardly and forwardly at the same angle α (Figure 17G) of about 10° as protrusion 72. Such canting allows lever 16F to be moved from the closed position shown in Figure 17F into the bit insert/release position shown in Figure 17H by applying a slight downward thumb pressure to the rearward end of lever 16F. A circumferential groove 82 can be machined in shaft 10, around recess 74. After lever 16F is placed in slot 14, an O-ring 84 is fitted into groove 82 to prevent dislodgment of lever 16F from slot 14. Persons skilled in the art will understand that it is not necessary to completely encircle shaft 10 to prevent dislodgment of lever 16F from slot 14. Any circumferential or semi-circumferential clip, cap or retainer capable of covering slot 14 to prevent dislodgment of the lever from the slot will suffice. Operation of the Figure 17A-17J embodiment is otherwise similar to that of the embodiment of Figures 6B and 16.

Figures 18A-18J depict a third alternative bit locking mechanism which does not require a spring to bias the pivot lever into the closed position. Components which are similar in the embodiments of Figures 17A-17J and 18A-18J bear the same reference numerals in those Figures and need not be described further. Lever 16G depicted in Figures 18A, 18C, 18E, 18F and 18H-18J is similar to lever 16F depicted in Figures 17A, 17C, 17E, 17F and 17H-17J, except that instead of a semi-spherical protrusion, a flat semi-cylindrical protrusion 76 is formed on the central underside of lever 16G. Protrusion 76 is canted downwardly and forwardly at a slight angle (about 10°) relative to lever 16G's transverse axis. A slot type recess 78 sized and shaped to snugly but pivotably receive protrusion 76 is formed in shaft 10, below the central portion of slot 14. Slot 78 is canted downwardly and forwardly at the same angle α (Figure 18G) of about 10° as protrusion 76. Such canting allows lever 16G to be moved from the closed position shown in Figure 18F into the bit insert/release position shown in Figure 18H by applying a slight downward thumb pressure to the rearward end of lever 16G. One side of shaft 10 is apertured, as indicated at 80, during the machining operation used to form slot 78 (e.g. to provide access for a Woodruff cutter). Operation of the Figure 18A-18J embodiment is otherwise similar to that of the embodiment of Figures 17A-17J.

Figure 19 depicts a double-ended bit 28F which can be used with any of the Figure 16, 17A-17J or 18A-18J embodiments of the invention. Specifically, bit 28F is formed with two circumferential recesses 42F, each having forward and rearward ends 44F, 46F which are substantially perpendicular to the longitudinal axis of bit 28F to permit latching engagement of lever 16E's tab 37E or lever 16F's tab 37E within bit 28F's recess 42F. Persons skilled in the art will understand that elongation of slot 14, lever 16E, lever 16F and shaft 10 may be required to accommodate bit 28F.

Accordingly, the scope of the invention is to be construed in accordance with the substance defined by the following claims.

## Claims

1. Screwdriver bit locking mechanism, comprising:
(a) a shaft (10);
(b) a bit chuck (12) in one end of the shaft (10);
(c) a slot (14) in the shaft (10), the slot (14) extending substantially parallel to a longitudinal axis of the shaft (10) and intersecting a rearward portion of the chuck (12);
(d) a lever (16F; 16G);
(e) a tab (37E) on a forward end (40E) of the lever (16F, 16G), the tab (37E) having a rearward face (38E) having a downward and rearward taper; **characterized by**
(f) a magnet (32E) in the shaft (10) normally biasing the tab (37E) into the chuck (12); wherein a protrusion (72, 76) on the lever (16F, 16G) is pivotally coupling the lever (16F, 16G) to the shaft (10) within the slot and maintaining the lever (16F) within the slot (14) substantially parallel to the shaft (10).

2. Screwdriver bit locking mechanism, as claimed in claim 1 **characterized in that** for pivotable movement of the lever between:
(i) a bit insert/release position in which the tab (37E) is withdrawn from a rearward portion of the chuck;
(ii) a closed position in which:
(1) the tab (37E) protrudes into the rearward portion of the chuck; and
(2) the lever (16F, 16G) does not protrude beyond the shaft's (10) external circumference.

3. Screwdriver bit locking mechanism as claimed in claim 1, wherein the lever's forward end (40E) is rounded.

4. Screwdriver bit locking mechanism as claimed in claim 1, wherein the lever's forward end (40E) is tapered.

5. Screwdriver bit locking mechanism as claimed in claim 1, wherein the magnet (32E) is provided in the chuck's (12) base.

6. Screwdriver bit locking mechanism as claimed in claim 1, wherein the protrusion (72, 76) is semi-spherical.

7. Screwdriver bit locking mechanism as claimed in claim 1, further comprising a retainer (84) covering the slot (14) to prevent dislodgement of the lever (16F) from the slot (14).

8. System comprising a screwdriver with a screwdriver bit (28E) and a screwdriver bit locking mechanism as claimed in claim 1, the screwdriver bit (28E) comprising:
(a) a shank (30);
(b) a collar on a rearward end of the shank (30), the collar having a length substantially equal to the difference between:
(i) the distance from the protrusion (72, 76) to the rearward face (38E) on the tab (37E);
(ii) the distance from the protrusion (72, 76) to a rearward end of the chuck; and
(c) a forward face on the collar, the forwarded face substantially perpendicular to a longitudinal axis of the bit (28E).

9. Screwdriver bit locking mechanism, comprising:
(a) a shaft (10)
(b) a bit chuck (12E) in one end of the shaft (10);
(c) a slot (14) in the shaft (10), intersecting a rearward portion of the chuck (12E);
(d) a lever (16E);
(e) a tab (37E) on a forward end (40E) of the lever (16E), the tab (37E) having a rearward face (38E) having a downward and rearward taper; **characterized by**
(f) a pivot pin (18) pivotally coupling the lever (16E) to the shaft (10) and maintaining the lever (16E) within the slot (14) substantially parallel to the shaft (10); (g) a magnet (32E) in the shaft (10), normally biasing the tab (37E) into the chuck (12E).

10. Screwdriver bit locking mechanism as claimed in claim 9 wherein the magnet (32E) is provided in the chuck's base.

11. System comprising a screwdriver with a screwdriver bit (28E) and a screwdriver bit locking mechanism as defined in claim 9, the screwdriver bit (28E) comprising:
(a) a shank (30);
(b) a collar on a rearward end of the shank (30), the collar having a length substantially equal to the difference between:
(i) the distance from the pivot pin (18) to the rearward face (38E) on the tab (37E);
(ii) the distance from the pivot pin (18) to a rearward end of the chuck (12E); and
(c) a forward face on the collar, the forward face substantially perpendicular to a longitudinal axis of the bit (28E).

## Patentansprüche

1. Schraubendreher-Bit-Verschlussmechanismus, umfassend:
(a) eine Welle (10);
(b) ein Bit-Spannfutter (12) an einem Ende der Welle (10);
(c) eine Nut (14) in der Welle (10), wobei die Nut (14) sich im Wesentlichen parallel zu einer Längsachse der Welle (10) erstreckt und einen rückwärtigen Teil des Bit-Spannfutters (12) kreuzt;
(d) einen Hebel (16F; 16G);
(e) eine Lasche (37E) an einem vorderen Ende (40E) des Hebels (16F, 16G), wobei die Lasche (37E) eine rückwärtige Fläche (38E) aufweist, welche eine nach unten und rückwärtig verlaufende Abschrägung aufweist; **gekennzeichnet durch**
(f) einen Magneten (32E) in der Welle (10), welcher normalerweise die Lasche (37E) in das Spannfutter (12) vorspannt; wobei ein Vorsprung (72, 76) auf dem Hebel (16F, 16G) den Hebel (16F, 16G) schwenkbar mit der Welle (10) innerhalb der Nut koppelt und den Hebel (16F) in der Nut (14) im Wesentlichen parallel zu der Welle (10) hält.

2. Schraubendreher-Bit-Verschlussmechanismus nach Anspruch 1, **gekennzeichnet durch** eine Schwenkbewegung des Hebels zwischen:
(i) einer Eingabe-/Freigabe-Position, in welcher die Lasche (37E) von einem rückwärtigen Teil des Spannfutters abgezogen wird;
(ii) einer Schließposition, in welcher:
(1) die Lasche (37E) in den rückwärtigen Teil des Spannfutters vorsteht; und
(2) der Hebel (16F, 16G) nicht über den Außenumfang der Welle (10) vorsteht.

3. Schraubendreher-Bit-Verschlussmechanismus nach Anspruch 1, wobei das vordere Ende des Hebels (40E) abgerundet ist.

4. Schraubendreher-Bit-Verschlussmechanismus nach Anspruch 1, wobei das vordere Ende des Hebels (40E) spitz zulaufend ist.

5. Schraubendreher-Bit-Verschlussmechanismus nach Anspruch 1, wobei der Magnet (32E) in der Spannfutter-Basis (12) bereitgestellt wird.

6. Schraubendreher-Bit-Verschlussmechanismus nach Anspruch 1, wobei der Vorsprung (72, 76) semi-sphärisch ist.

7. Schraubendreher-Bit-Verschlussmechanismus nach Anspruch 1, ferner eine Halterung (84) umfassend, welche die Nut (14) bedeckt, um die Entfernung des Hebels (16F) von der Nut (14) zu verhindern.

8. System, welches einen Schraubendreher mit einem Schraubendreher-Bit (28E) und einem Schraubendreher-Bit-Verschlussmechanismus nach Anspruch 1 umfasst, wobei das Schraubendreher-Bit (28E) umfasst:
(a) eine Welle (30);
(b) einen Kragen an einem rückwärtigen Ende der Welle (30), wobei der Kragen eine Länge aufweist, welche im Wesentlichen der Differenz zwischen:
(i) der Distanz von dem Vorsprung (72, 76) zu der rückwärtigen Fläche (38E) auf der Lasche (37E);
(ii) der Distanz von dem Vorsprung (72, 76) zu einem rückwärtigen Ende des Spannfutters;
entspricht und
(c) eine vordere Fläche auf dem Kragen, wobei die vordere Fläche im Wesentlichen senkrecht zu einer Längsachse des Bit (28E) verläuft.

9. Schraubendreher-Bit-Verschlussmechanismus, umfassend:
(a) eine Welle (10)
(b) ein Bit-Spannfutter (12E) an einem Ende der Welle (10);
(c) eine Nut (14) in der Welle (10), welche einen rückwärtigen Teil des Spannfutters (12E) schneidet;
(d) einen Hebel (16E);
(e) eine Lasche (37E) an einem vorderen Ende (40E) des Hebels (16E), wobei die Lasche (37E) eine rückwärtige Fläche (38E) aufweist, welche eine nach unten und rückwärtig verlaufende Abschrägung aufweist; **gekennzeichnet durch**
(f) einen Schwenkstift (18), welcher den Hebel (16E) schwenkbar mit der Welle (10) koppelt und wobei der Hebel (16E) innerhalb der Nut (14) im Wesentlichen parallel zu der Welle (10) gehalten wird; (g) einen Magneten (32E) in der Welle (10), welcher normalerweise die Lasche (37E) in das Spannfutter (12E) vorspannt.

10. Schraubendreher-Bit-Verschlussmechanismus nach Anspruch 9, wobei der Magnet (32E) an der Spannfutter-Basis bereitgestellt wird.

11. System, welches einen Schraubendreher mit einem Schraubendreher-Bit (28E) und einem Schraubendreher-Bit-Verschlussmechanismus nach Anspruch 9 umfasst, wobei das Schraubendreher-Bit (28E) umfasst:
(a) eine Welle (30);
(b) einen Kragen an einem rückwärtigen Ende der Welle (30), wobei der Kragen eine Länge aufweist, welche im Wesentlichen der Differenz zwischen:
(i) der Distanz von dem Vorsprung (72, 76) zu der rückwärtigen Fläche (38E) auf der Lasche (37E);
(ii) der Distanz von dem Vorsprung (72, 76) zu einem rückwärtigen Ende des Spannfutters;
entspricht und
(c) eine vordere Fläche auf dem Kragen, wobei die vordere Fläche im Wesentlichen senkrecht zu einer Längsachse des Bit (28E) verläuft.

## Revendications

1. Mécanisme de verrouillage d'embout de tournevis, comprenant :
(a) une tige (10) ;
(b) un mandrin d'embout (12) à une extrémité de la tige (10) ;
(c) une fente (14) dans la tige (10), la fente (14) s'étendant de manière sensiblement parallèle à un axe longitudinal de la tige (10) et croisant une portion arrière du mandrin (12) ;
(d) un levier (16F ; 16G) ;
(e) une languette (37E) sur une extrémité avant (40E) du levier (16F, 16G), la languette (37E) ayant une face arrière (38E) présentant un rétrécissement vers le bas et vers l'arrière ; **caractérisé par**
(f) un aimant (32E) dans la tige (10) sollicitant normalement la languette (37E) dans le mandrin (12) ; dans lequel une saillie (72, 76) sur le levier (16F, 16G) couple de manière pivotante le levier (16F, 16G) à la tige (10) dans la fente et maintient le levier (16F) dans la fente (14) de manière sensiblement parallèle à la tige (10).

2. Mécanisme de verrouillage d'embout de tournevis selon la revendication 1, **caractérisé en ce que** pour un déplacement pivotant du levier entre :
(i) une position d'insertion/libération d'embout dans laquelle la languette (37E) est retirée d'une portion arrière du mandrin ;
(ii) une position fermée dans laquelle :
(1) la languette (37E) fait saillie dans la portion arrière du mandrin ; et
(2) le levier (16F, 16G) ne fait pas saillie au-delà de la circonférence externe de la tige (10).

3. Mécanisme de verrouillage d'embout de tournevis selon la revendication 1, dans lequel l'extrémité avant du levier (40E) est arrondie.

4. Mécanisme de verrouillage d'embout de tournevis selon la revendication 1, dans lequel l'extrémité avant du levier (40E) est conique.

5. Mécanisme de verrouillage d'embout de tournevis selon la revendication 1, dans lequel l'aimant (32E) est disposé dans la base du mandrin (12).

6. Mécanisme de verrouillage d'embout de tournevis selon la revendication 1, dans lequel la saillie (72, 76) est semi-sphérique.

7. Mécanisme de verrouillage d'embout de tournevis selon la revendication 1, comprenant en outre un élément de retenue (84) recouvrant la fente (14) pour empêcher le délogement du levier (16F) de la fente (14).

8. Système comprenant un embout de tournevis (28E) et un mécanisme de verrouillage d'embout de tournevis selon la revendication 1, l'embout de tournevis (28E) comprenant :
(a) un culot (30) ;
(b) un collier sur une extrémité arrière du culot (30), le collier ayant une longueur sensiblement égale à la différence entre :
(i) la distance entre la saillie (72, 76) et la face arrière (38E) sur la languette (37E) ;
(ii) la distance entre la saillie (72, 76) et une extrémité arrière du mandrin ; et
(c) une face avant sur le collier, la face avant étant sensiblement perpendiculaire à un axe longitudinal de l'embout (28E).

9. Mécanisme de verrouillage d'embout de tournevis, comprenant :
(a) une tige (10)
(b) un mandrin d'embout (12E) à une extrémité de la tige (10) ;
(c) une fente (14) dans la tige (10), croisant une portion arrière du mandrin (12E) ;
(d) un levier (16E) ;
(e) une languette (37E) sur une extrémité avant (40E) du levier (16E), la languette (37E) ayant une face arrière (38E) présentant un rétrécissement vers le bas et vers l'arrière ; **caractérisé par**
(f) un axe de pivotement (18) couplant de manière pivotante le levier (16E) à la tige (10) et maintenant le levier (16E) dans la fente (14) de manière sensiblement parallèle à la tige (10) ;
(g) un aimant (32E) dans la tige (10), sollicitant normalement la languette (37E) dans le mandrin (12E).

10. Mécanisme de verrouillage d'embout de tournevis selon la revendication 9 dans lequel l'aimant (32E) est disposé dans la base du mandrin.

11. Système comprenant un tournevis avec un embout de tournevis (28E) et un mécanisme de verrouillage d'embout de tournevis selon la revendication 9, l'embout de tournevis (28E) comprenant :
(a) un culot (30) ;
(b) un collier sur une extrémité arrière du culot (30), le collier ayant une longueur sensiblement égale à la différence entre :
(i) la distance entre l'axe de pivotement (18) et la face arrière (38E) de la languette (37E) ;
(ii) la distance entre l'axe de pivotement (18) et une extrémité arrière du mandrin (12E) ; et
(c) une face avant sur le collier, la face avant étant sensiblement perpendiculaire à un axe longitudinal de l'embout (28E).
